# EUROPEAN PATENT APPLICATION

(11) **EP 4 826 691 A2**
(43) Date of publication of application: **21.10.2026**
(21) Application number: 26165786.0
(22) Date of filing: 18.03.2026
(51) Int. Cl.: G08B 13/196

(54) **FIRST RESPONDER SYSTEM THAT OPERATES ARTIFICIAL INTELLIGENCE (AI) MODEL AND RELATED METHODS**

(30) Priority: 17.04.2025 US 202519181394
(71) Applicant: L3Harris Global Communications, Inc., Albany, NY 12207 (US)
(72) Inventor: SHABESTAR, Fred, Melbourne, 32919 (US); SNYDERMAN, Jacob, Melbourne, 32919 (US); SKRZYPEK, Jan, Melbourne, 32919 (US); ROYSTER, Cathy, Melbourne, 32919 (US)
(74) Representative: Schmidt, Steffen J.

(57) **Abstract**

A communications system may include a radio associated with a user for communication with a dispatcher, and a camera associated with the user and configured to generate a scene image for an area adjacent the user. A processor may be configured to operate an artificial intelligence (AI) model to process the scene image and generate at least one code related thereto, and send the at least one code to the dispatcher via the radio.

## Description

### Background

Land mobile radio (LMR) systems are terrestrially-based, professional, push-to-talk (PTT) wireless communications systems commonly used for critical communications by first responders and similar public safety organizations, such as police, firefighters, and other emergency responders. The LMR systems operate with mobile radios, e.g., handheld portable radios, repeaters, a network infrastructure, and a fixed base station, such as used by dispatchers.

LMR systems have been deployed for decades to support mission-critical voice communications for first responders, and have migrated from basic analog LMR systems used for voice to more advanced digital LMR systems that support both voice and data.

APCO Project 25 (P25) is the set of standards that define how the land mobile radio systems, radios, and dispatch equipment operate and interoperate. These standards are published by the Association of Public Safety Communications Officials (APCO) and include the standards for interoperability among first responder agencies and vendors to ensure spectral efficiency and permit different manufacturers of mobile radios to be compatible with each other and integrate voice and data services. The P25 specification is based upon a narrowband land mobile radio bandwidth of 12.5 KHz. Some land mobile radios incorporate broadband services along with the narrowband coverage, such as using LTE and WiFi and Broadband technology.

### Summary

A communications system, as an example P25 network system, may comprise several users, each with a radio for communication with a dispatcher. A camera may be associated with the user, as an example, a first responder, and configured to generate a scene image for an area adjacent the first responder. A processor may be configured to operate an artificial intelligence (AI) model to process the scene image and generate at least one code related thereto, and send the at least one code to the dispatcher via the radio and in this example a P25 network.

There may be at least one code which may relate to at least one of a weapon, a hazardous material, contraband, and an identification document in the scene image. A user interface, asn an example, first responder interface, may be coupled to the processor, and the processor may be configured to generate an alert on the interface based on alert information. The processor may also be configured to receive the alert information from the dispatcher via the radio. The processor may also be configured to generate the alert information from the scene image.

An audio sensor may be included for the area adjacent the user, and the processor may be configured to operate the AI model further based on audio from the audio sensor. The AI model may comprise a convolutional neural network (CNN), for example. The radio and processor may be carried by the housing. The radio may comprise a P25 public safety radio. The radio may be operable in the Land Mobile Radio (LMR) frequency bands.

A communications device, as an example, first responder device, may comprise a housing, a radio carried by the housing and associated with a user for communication with a dispatcher, and a processor carried by the housing. The processor may be configured to operate an artificial intelligence (AI) model to process a scene image for an area adjacent the user and generate at least one code related thereto, and send the at least one code to the dispatcher via the radio.

A communications method may comprise using a processor to operate an artificial intelligence (AI) model to process a scene image for an area adjacent a user and generate at least one code related thereto. The method may include sending the at least one code to a dispatcher via a radio associated with the user.

### Brief Description of the Drawings

FIG. 1 is a block diagram of the communications system according to an embodiment.
FIG. 2 is an environmental view of a user as a first responder police officer wearing the radio, as an example, mobile radio and camera of FIG. 1.
FIG. 3 is a scene image showing identification of a license plate by the AI model.
FIG. 4 is a scene image showing an identification document as an automobile license and the textual information identified by the AI model.
FIG. 5 are scene images showing an identified weapon in a vehicle.
FIG. 6 is a scene image showing potential hazardous material as a bottle containing poison within an automobile.
FIG. 7 is a scene image showing potential contraband in an automobile.

### Detailed Description

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art.

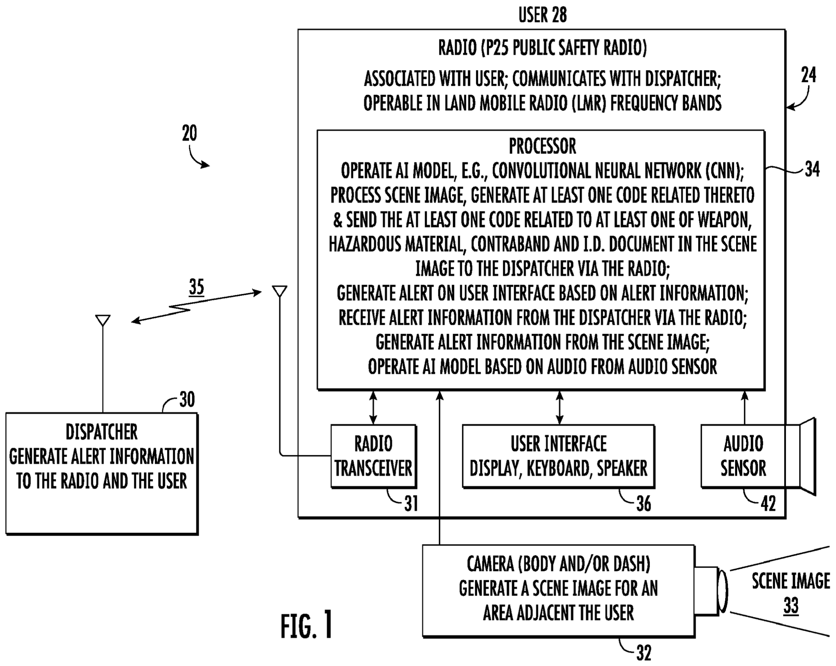

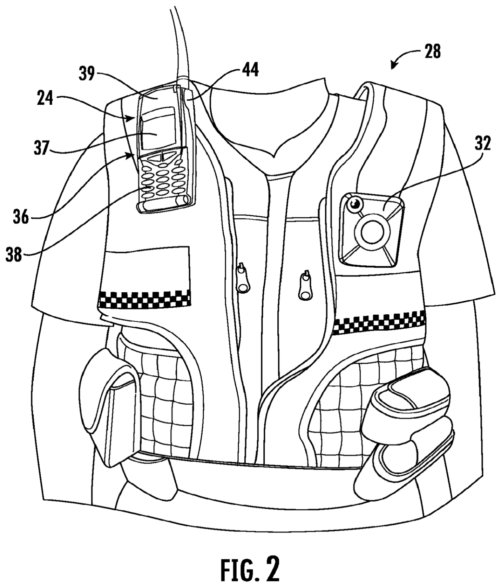

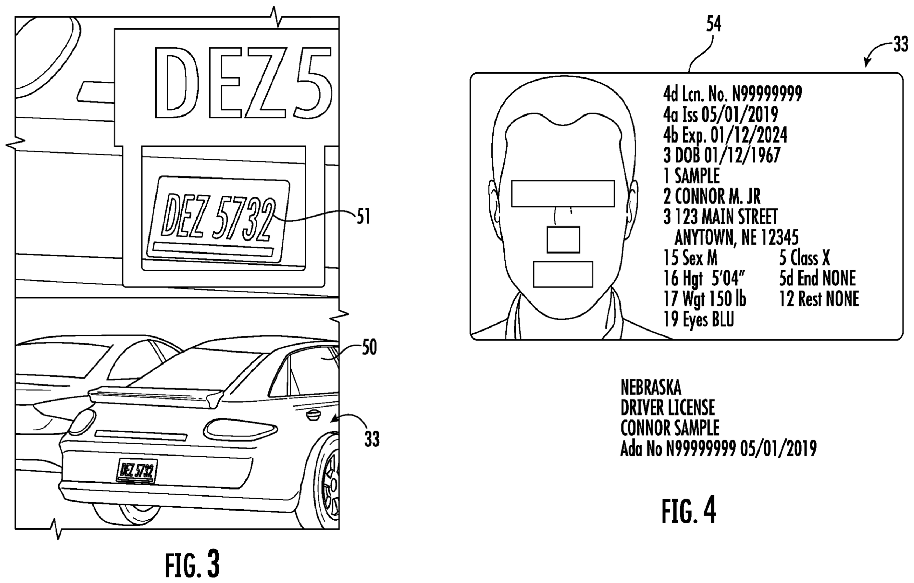

Referring now to the block diagram shown in FIG. 1, and the environmental view of a user as a first responder police officer in FIG. 2, a communications system as a first responder system is shown generally at **20,** and includes a radio, as an example mobile radio **24** associated with a user as the first responder **28** for communication with a dispatcher **30** via a radio transceiver **31.** A camera **32** is associated with the first responder **28** and configured to generate a scene image **33** for an area adjacent to the user as the first responder with example scene images shown in FIGS. 3-7 and explained in detail below. In this example, the camera **32** may be a body camera worn by the first responder **28,** such as shown in FIG. 2, or a dash camera in a police or other vehicle in other embodiments. A processor **34** is configured to operate an artificial intelligence (AI) model to process the scene image **33** and generate at least one code **35** related thereto, and send the at least one code to the dispatcher **30** via the mobile radio **24.** As will be appreciated by those skilled in the art, the processor **34** may include microprocessor circuitry and an associated memory cooperating therewith.

This at least one code may relate to at least one of a weapon, a hazardous material, contraband, and an identification document with examples explained relative to the scene images shown in the drawing views of FIGS. 3-7. A user interface, as an example first responder interface **36,** is coupled to the processor **34,** which is configured to generate an alert on the first responder interface based on alert information. The first responder interface **36** may be a display with a speaker and keyboard functionality, such as a touchscreen display, for example.

In the environmental view of the police officer as a first responder **28** shown in FIG. 2, the mobile radio **24** includes a user interface, as an example first responder interface **36,** having a display **37** and keypad **38** through which alerts can be generated and requests sent via text. The mobile radio **24** also includes a speaker **39,** but may support an ear insert and microphone for audible communications (not shown). The processor **34** is configured to receive alert information from the dispatcher **30** via the mobile radio **24** and also generate alert information from the scene image **33.** A first responder **28** may carry an audio sensor **42,** such as a microphone, connected to the processor **34** to receive and transmit the audio picked up in the area adjacent the first responder. The microphone may be separate from the mobile radio **24.** The processor **34,** in some embodiments, may operate the AI model further based on audio from the audio sensor **42.**

The AI model may be based on a convolution neural network (CNN) as a type of deep learning neural network that analyzes images to recognize objects and classify them, and also process audio, text and time-series data, as will be appreciated by those skilled in the art. The convolutional neural network may be a first responder specifically trained object detection convolutional neural network designed to detect a Risk Index of objects in a scene image **33.** The AI model may use known neural network labels to compress information and a Risk Index into sub-audible tones as a code **35** for the narrow band mobile radio **24** operation.

As shown in FIGS. 1 and 2, the mobile radio **24** and processor **34** are carried by a portable housing **44.** In this example, the radio, as an example mobile radio **24,** is formed as a P25 public safety mobile radio operable in the land mobile radio (LMR) frequency bands, including UHF, VHF, 700/800 and 900 MHz. The P25 public safety mobile radio **24** may have different operating characteristics, and usually operates in a 12.5 KHz channel bandwidth. In an example, the mobile radio **24** may use Frequency Domain Multiple Access (FDMA) with Continuous Four-Level Frequency Modulation (C4FM) and Quantum Phase-Shift Key (QPSK) modulation. In another example known as P25 phase II, the mobile radio **24** may use two-slot Time Division Multiple Access (TDMA)and Harmonized Continuous Phase Modulation (H-CPM). Other types of mobile radios may also be used.

The P25 mobile radios **24** may incorporate encryption, including end-to-end 256-bit AES encryption. An example mobile radio **24** that may be used with the first responder system **20** includes the model XL-185P portable, converged LTE, or similar land mobile radios manufactured by L3Harris Technologiies, Inc. of Melbourne, Florida. When the LTE services are unavailable for high bandwidth applications, such as transmitting and receiving video data of scene images **33** with the dispatcher **30,** the first responder system **20** is still available for use. Even when LTE is available, the first responder system **20** processing scene images **33** and generating codes **35** related to those scene images to the dispatcher is advantageous since the AI model can interpret and determine hazards and safety concerns for the first responder **28.**

The first responder system **20** may use different AI models. An AI model that has been found beneficial includes the MobileNet as a family of convolutional neural network architectures that have a small size, low latency, and low power consumption for on-device inference and edge computing as on the mobile radio **24** and similar embedded systems. This type of AI model may use inverted residual layers and linear bottlenecks with software improvements using piecewise-linear approximations of "swish" and "sigmoid" activation functions. Another AI model that may be incorporated with the mobile radio **24** and processor **34** is an EfficientNet as a convolutional neural network for analysis of scene images **33** that incorporates compound scaling to uniformly scale dimensions of depth with good resolution using a single parameter. Of course, other AI models may also be used.

As noted before, the processor **34** operates the artificial intelligence model and processes the scene images **33** to generate at least one code **35** related thereto, and send that at least one code to the dispatcher **30** via the mobile radio **24.** The at least one code can be related to a weapon, a hazardous material, contraband and an identification document that the AI model has determined in all likelihood is in the scene image **33.** These are broad-based categories and include as different non-limiting examples, handguns, rifles, shotguns, knives, explosives, automatic weapons, bats and clubs, machetes, axes, pepper spray, tasers, cross-bows, chemical containers, gas cylinders, flammable liquids, biological hazards, radiation sources, drugs and paraphernalia, stolen property, identification documents and vehicles. The AI model may work in conjunction with an optical character recognition platform that accurately describes scene images **33,** packetizes the scene images, and transmits to the radio the generated code **35** related to the specific type of scene image and identified weapon, hazardous material, contraband or identification document. The mobile radio **24** may compress the scene image **33** and generate the code **35,** which is transmitted over sub-audible tones inside the narrow band LMR channel.

Referring now to FIGS. 3-7, a specific example of the operation of the first responder system **20** is described. For example, a police officer associated with the first responder system **20** may be following a vehicle **50** that is operated erratically (FIG. 3). The officer starts to pursue the vehicle **50** and the AI model via the camera **32** and mobile radio **24** detects the license plate number **51** and processes the image to determine the plate number that the officer otherwise may not be able to view clearly. The mobile radio **24** sends the plate number **51** along with other relevant information, such as location, speed and vehicle description over text to the dispatcher **30** for situational awareness and a possible background check. The officer may pull the vehicle **50** over. As the officer gets out of his car and walks to the pulled-over vehicle **50,** the AI model may be updating the dispatcher **30** on the current conditions, such as overall visibility, the suspect's behavior, and a description of the vehicle. At this time, the AI model may make an assessment Risk Index (RI) of the situation, updating the dispatcher who may assert additional assets or guidance in response to the RI.

The processor **34** operating the AI model in conjunction with the mobile radio **24** and the camera **32** may use artificial intelligence enhanced video recognition of the current environment and obtain any feedback from the dispatcher **30** based on data received from a search for the license plate **51,** such as outstanding warrants and suspensions. The camera **32** as an officer worn body camera and/or dash camera, if installed in the patrol car, may be used to process any scene images **33** and make a quick assessment of the risk, and based on this information, the AI model may update a risk index and provide advice and recommendations, such as generating text or an audible code or instructions to the officer using the first responder interface **36.** An example could be a text or audible instructions into an earpiece worn by the officer or into the speaker **39** on the mobile radio **24.** The AI model may declare an emergency when it detects that a risk index is above a certain threshold as explained in the examples below.

The police officer may approach the vehicle **50** and ask for license and/or registration **54** that may be caught by the camera **32.** The AI model may process the image from the license **54** to recognize details (FIG. 4), as shown in the image of the license with the face obscured for privacy and extract text as shown below the license **54** for pertinent information. The AI model may process the scene image **33** received from the first responder camera **32** of the vehicle **50** interior, and monitor the conversation for and threats, such as via the audio sensor **42.** There may be a low-risk situation when the police officer shows the license **54** and registration to the camera **32.** An image-to-text converter in the AI model may extract text from the image of the license **54,** such as the name, driver's license number, and related information and send that information to the dispatcher **30.**

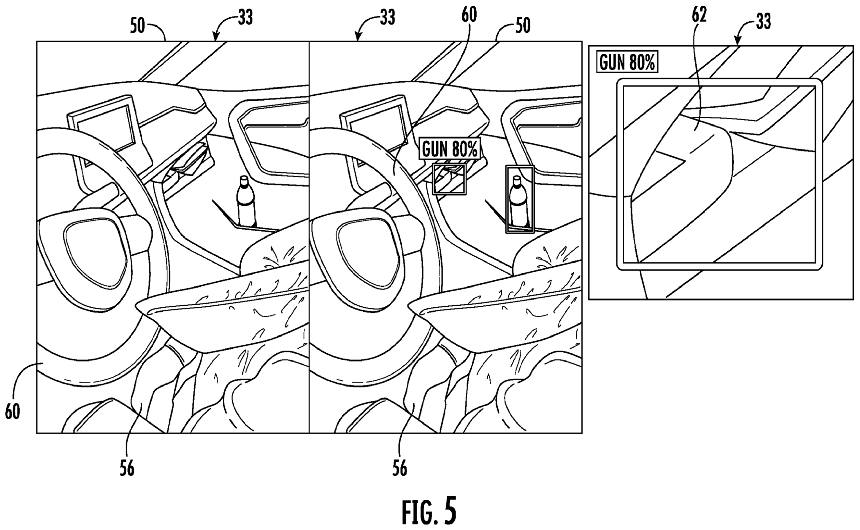

This scenario may quickly turn into a high-risk situation, for example, when the camera **32** scans the interior of the vehicle **50** and processes the scene image **33** and determines the risk is high due to the conditions of being at night with low visibility and the driver does not have his hands **56** on the steering wheel **60** as shown in FIG. 5. The AI model may generate a code **35** related to this higher risk situation that may be sent to the dispatcher **30** via the mobile radio **24.**

In a few seconds, the AI model may further process the scene image **33** when the camera **32** is pointed towards the glove compartment. A feature extraction component of the AI model with image recognition may detect a weapon **62,** as a pistol in this example, that is not immediately recognized by the officer as shown in the scene image **33** of FIG. 5 showing an 80% chance there is a gun. The AI model may process that information and send a new code **35** for this alert to both the dispatcher **30** and the officer's first responder interface **36,** including displaying a warning on the display **37** and an audio warning through an earplug or the speaker **39** to warn of the danger.

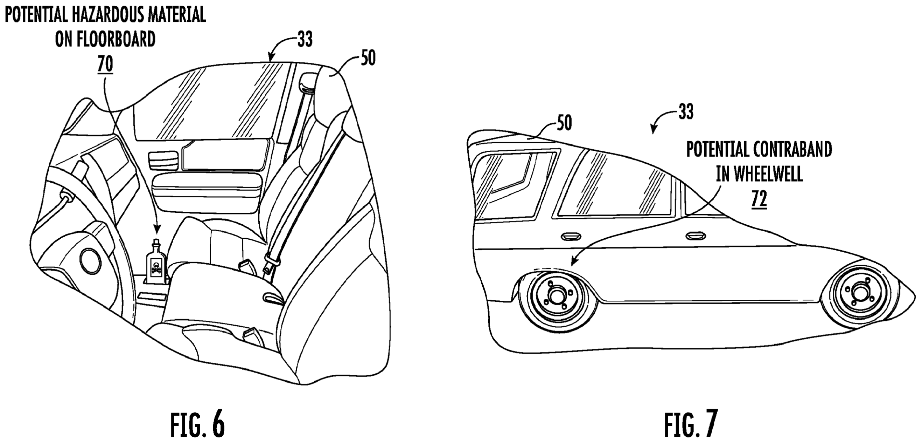

A similar Risk Index may be determined as shown in the example of the scene image **33** in FIG. 6, where an object is determined to possibly be a hazardous material, such as a bottle of poison **70** having a greater chance of containing a chemical or other hazardous material as a non-limiting example.

In FIG. 7, the AI model may process the exterior of the vehicle **50** as the officer approaches, and via image recognition, may determine that the tire well has been tampered with and may contain contraband **72** such as drugs.

In yet a further example, the vehicle **50** may quickly take off because the driver is in a panic. The officer may pursue and the AI model may process the scene images **33** of the road chase from the camera **32**, such as officer's body camera or dash camera. When the hot pursuit becomes dangerous, the AI model may determine it is too dangerous and determine the risk assessment is above a threshold and generate an audible command for the officer to stop pursuit.

Many other non-limiting examples are possible using the first responder system **20**.

A first responder method includes using a processor **34** to operate an artificial intelligence (AI) model to process a scene image **33** for an area adjacent a user, as an example, first responder **28**, and generate at least one code **35** related thereto. The method includes sending the at least one code **35** to a dispatcher **30** via the radio, as an example, mobile radio **24** associated with the first responder **28**.

Many modifications and other embodiments of the disclosure will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included within the scope of the appended claims.

## Claims

1. A communications system comprising:
a radio associated with a user for communication with a dispatcher;
a camera associated with the user and configured to generate a scene image for an area adjacent the user; and
a processor configured to operate an artificial intelligence (AI) model to process the scene image and generate at least one code related thereto, and send the at least one code to the dispatcher via the radio.

2. The communications system of claim 1 wherein the at least one code relates to at least one of a weapon, a hazardous material, contraband, and an identification document in the scene image.

3. The communications system of claim 1 comprising a user interface coupled to the processor; and wherein the processor is configured to generate an alert on the user interface based on alert information.

4. The communications system of claim 3 wherein the processor is configured to receive the alert information from the dispatcher via the radio.

5. The communications system of claim 3 wherein the processor is configured to generate the alert information from the scene image.

6. The communications system of claim 1 comprising an audio sensor for the area adjacent the user; and wherein the processor is configured to operate the AI model further based on audio from the audio sensor; and/or
wherein the AI model comprises a convolutional neural network (CNN.)

7. The communications system of claim 1 comprising a housing; and wherein the radio and processor are carried by the housing; and/or
wherein the radio comprises a P25 public safety radio; and/or
wherein the radio is operable in the Land Mobile Radio (LMR) frequency bands.

8. A communications device comprising:
a housing;
a radio carried by the housing and associated with a user for communication with a dispatcher; and
a processor carried by the housing and configured to operate an artificial intelligence (AI) model to process a scene image for an area adjacent the user and generate at least one code related thereto, and send the at least one code to the dispatcher via the radio.

9. The communications device of claim 8 wherein the at least one code relates to at least one of a weapon, a hazardous material, contraband, and an identification document in the scene image; and/or
wherein the communications device comprises a user interface coupled to the processor; and wherein the processor is configured to generate an alert on the user interface based on alert information.

10. The communications device of claim 9 wherein the processor is configured to receive the alert information from the dispatcher via the radio.

11. The communications device of claim 9 wherein the processor is configured to generate the alert information from the scene image.

12. The communications device of claim 7 wherein the processor is configured to operate the AI model further based on audio from an audio sensor in the area adjacent the user.

13. The communications device of claim 7 wherein the AI model comprises a convolutional neural network (CNN); and/or
wherein the radio comprises a P25 public safety radio.

14. A communications method comprising:
using a processor to operate an artificial intelligence (AI) model to process a scene image for an area adjacent a user and generate at least one code related thereto; and
sending the at least one code to a dispatcher via a radio associated with the user.

15. The method of claim 14 wherein the at least one code relates to at least one of a weapon, a hazardous material, contraband, and an identification document in the scene image; and/or
comprising using the processor to generate an alert on a user interface based on alert information; and/or
comprising using the processor configured to operate the AI model based on audio from an audio sensor in the area adjacent the user; and/or
wherein the AI model comprises a convolutional neural network (CNN); and/or
wherein the radio comprises a P25 public safety radio.
